# EUROPÄISCHE PATENTSCHRIFT

(11) **EP 1 900 501 B1**
(45) Veröffentlichungstag und Bekanntmachung des Hinweises auf die Patenterteilung: **29.10.2008**
(21) Anmeldenummer: 07013652.8
(22) Anmeldetag: 12.07.2007
(51) Int. Cl.: B29C 65/10, E04D 15/04

(54) **Schweissgerät zum Verbinden seitlich überlappender Dichtungsbahnen**
Welding device for connecting laterally overlapping sealing sheeting
Appareil de soudure destiné à relier des bandes d'étanchéité se chevauchant latéralement

(30) Priorität: 15.09.2006 DE 202006014392 U; 15.09.2006 DE 202006014391 U
(43) Veröffentlichungstag der Anmeldung: 19.03.2008
(73) Patentinhaber: Leister Process Technologies, 6056 Kägiswil (CH)
(72) Erfinder: Gisler, Lukas, 6055 Alpnach Dorf (CH); Niederberger, Adolf, 6056 Kägliswil (CH)
(74) Vertreter: Klocke, Peter

(56) Entgegenhaltungen:
- DE-U1-0202006 014 17
- JP-A- 62 092 829
- JP-A- 63 247 023

## Beschreibung

Die Erfindung betrifft ein Schweißgerät zum Verbinden von überlappend verlegten, flächigen Dichtungsbahnen, mit einem von Rollen getragenen, angetriebenen Fahrgestell, mit einer Heizeinrichtung zum lokalen Erhitzen der Dichtungsbahnen, mit mindestens einer am Fahrgestell angeordneten Anpressrolle zum Zusammenpressen der heiß miteinander zu verbindenden Dichtungsbahnen.

Derartige Schweißgeräte sind allgemein bekannt und im Einsatz und werden zum Verschweißen von Folien und Dichtungsbahnen, beispielsweise aus Kunststoff, entlang ihrer überlappenden Randbereiche verwendet, vgl. JP 62092829. Die Dichtungsbahnen werden miteinander verbunden, indem sie an den Randbereichen auf einander gegenüberliegenden Seiten lokal erhitzt und heiß zusammengepresst werden. Das Zusammenpressen erfolgt in der Regel mit mindestens einer an einem selbstfahrenden Fahrgestell des Schweißgerätes angeordneten Anpressrolle, die das Fahrgestell zusammen mit anderen Rollen trägt.

Bekannte Schweißgeräte sind stabil und belasten die Anpressrolle mit einem Hauptanteil ihres Gewichtes, um einen hohen Anpressdruck für eine gute Schweißqualität sicherzustellen. Es ist üblich, die Anpressrolle auch als Antriebsrolle auszubilden, da sie fest gegen den Untergrund gepresst wird und damit aufgrund ihres hohen Reibschlusses eine gute Krafteinleitung für die Vorwärtsbewegung sicherstellt. Eine solche angetriebene Anpressrolle wird bevorzugt an einem in Schweißrichtung hinteren Ende des Fahrgestells des Schweißgerätes, im Anschluss an die Heizeinrichtung zum Erhitzen der Dichtungsbahnen angeordnet.

Schweißgeräte der eingangs beschriebenen Art können auch zum Verschweißen von Bitumen-Dichtungsbahnen verwendet werden. Physikalisch gesehen gehört Bitumen zu den thermoplastischen Stoffen, d. h. seine Eigenschaften sind temperaturabhängig. Beim Abkühlen wird es hart, bei Erwärmung durchläuft es stufenlos alle Zustände von fest über zähflüssig bis dünnflüssig. Zum Schweißen der Bitumen-Dichtungsbahnen müssen diese erhitzt werden, bis das Bitumen an den zu verbindenden Stellen zumindest zähflüssig ist. Bei einem solchen Schweißvorgang kommt das Fahrgestell des Schweißgerätes häufig in Kontakt mit dem flüssigen Bitumen und wird durch diesen stark verschmutzt. Besonders betroffen davon sind die das Fahrgestell tragenden Rollen, wobei die die Bitumen-Dichtungsbahnen heiß gegeneinander pressende Anpressrolle besonders exponiert ist. Sie läuft unmittelbar auf der Überlappung, also im plastifizierten Bereich.

Für Folien, die auf einem harten Untergrund liegen, wird als Anpressrollenmaterial Silikon verwendet, um elastisch auf schräg einwirkende Kräfte reagieren zu können. Diese Anpressrollen werden auch beim Verschweißen von Bitumen oder anderen ähnlichen elastischen Materialien verwendet. Die Qualität einer solchen Schweißverbindung ist abhängig von der Ebenheit einer Lauffläche der Anpressrolle, um die überlappenden Randbereiche über ihre Breite gleichmäßig zusammen zu pressen. Beim Schweißen von Bitumen-Dichtungsbahnen, bituminösen oder ähnlichen Dichtungsbahnen sowie anderen elastischen Dichtungsbahnen benetzt das plastifizierte Material die Lauffläche zunehmend und setzt sich ungleichmäßig verteilt dort fest. Damit keine Qualitätseinbußen entstehen, muss die Anpressrolle häufig manuell gereinigt werden. Die Reinigung ist aufwändig, da das Material fest an der Antriebsrolle haftet. Für die Reinigung ist damit eine längere Unterbrechung des Schweißvorgangs erforderlich, die unerwünscht ist.

Der Erfindung liegt daher die Aufgabe zugrunde, ein Schweißgerät vorzuschlagen, das einen praktisch unterbrechungsfreien Betrieb ermöglicht.

Diese Aufgabe wird erfindungsgemäß durch ein Schweißgerät mit den Merkmalen des Anspruchs 1 gelöst. Weitere vorteilhafte Ausgestaltungen sind den Unteransprüchen zu entnehmen.

Bei dem erfindungsgemäßen Schweißgerät ist am Fahrgestell eine zweite Anpressrolle aus gleichem oder anderem Material als Ersatz-Anpressrolle angeordnet, die ohne Werkzeug gegen die mit einer angetriebenen Achse gekoppelten erste Antriebsrolle austauschbar ist. Damit ist bei Bedarf schnell und ohne Wartezeiten eine saubere, nicht mit Bitumen verschmutzte Anpressrolle zur Hand, die einfach von dem Fahrgestell lösbar ist. Nach dem Entfernen der verschmutzten ersten Anpressrolle von der Antriebsachse kann die zweite Anpressrolle montiert und auf der Antriebsachse fixiert werden.

Zum Lösen der ersten und der zweiten Antriebsrolle von dem Fahrgestell des Schweißgerätes muss, ebenso wie zur Montage nach dem Austausch, kein Werkzeug benutzt werden. Somit kann der Austausch schnellstens erfolgen, ohne ein Werkzeug holen bzw. darauf warten zu müssen. Die Ersatz-Anpressrolle ist zweckmäßigerweise so auf dem Fahrgestell angeordnet, dass sie die Antriebsachse mit ihrem Hauptgewicht belastet, um die Traktion und den Anpressdruck der angetriebenen Anpressrolle, die das Fahrgestell bewegt und die Bitumen-Dichtungsbahnen zusammenpresst, zu optimieren.

Vorteilhafterweise weist das Fahrgestell eine Halterung für die zweite Anpressrolle auf, die vorzugsweise in Schweißrichtung hinter der ersten Antriebsrolle angeordnet ist. Bei in die Halterung eingesetzter zweiter Anpressrolle wird der Schwerpunkt der Schweißmaschine in Richtung der Antriebsachse verlagert und die Antriebsachse wie gewünscht zusätzlich belastet. Die Halterung kann eine Achse zum Aufschieben der Ersatz-Anpressrolle oder einen vorzugsweise zylindrischen Aufnahmeraum zur Aufnahme der zweiten Anpressrolle aufweisen.

In einer Ausführungsform der Erfindung ist die Anpressrolle auf der Antriebsachse durch eine Rändelschraube mit Bund fixiert. Dazu weist die Antriebsachse stirnseitig ein entsprechendes Innengewinde auf, in das die Rändelschraube einschraubbar ist. Die erste Antriebsrolle wird dadurch starr mit der Antriebsachse gekoppelt, wobei die Rändelschraube verhindert, dass sich die Anpressrolle axial verschiebt und/oder von der Antriebsachse abfällt. Die Antriebsrolle kann mittels der Rändelschraube von Hand montiert und demontiert werden.

Gemäß einer weiteren, vorteilhaften Ausgestaltung der Erfindung weist das Schweißgerät insbesondere für die Anwendung bei Bitumen eine Anpressrolle auf, die zumindest eine Lauffläche aus hartem metallischen Werkstoff aufweist. Des Weiteren ist an dem Fahrgestell ein Abstreifelement angeordnet, das an der Lauffläche aus metallischem Werkstoff anliegt oder dieser angenähert ist. Durch die Ausbildung der Lauffläche aus einem harten metallischen Werkstoff kann mittels eines stabilen Abstreifelementes anhaftendes Dichtungsbahnmaterial von der Lauffläche bei der Vorwärtsbewegung des Bitumen-Schweißgeräts im laufenden Betrieb abgestreift werden. Die Annäherung des Abstreifelements muss zumindest soweit gehen, dass diese Funktion gewährleistet ist (0-2 mm). Wesentlich ist, dass sowohl die Lauffläche als auch das Abstreifelement eine ausreichende Stabilität und Festigkeit aufweisen.

Grundsätzlich ist es möglich, nur den äußeren Durchmesserbereich der Anpressrolle ausreichend stabil aus einem metallischen Werkstoff auszubilden. Vorteilhafterweise ist jedoch die gesamte Anpressrolle aus einem harten Metall oder einer Metalllegierung ausgebildet. Dies hat den Vorteil, dass das Gewicht der Anpressrolle gegenüber der bisherigen Rolle erhöht ist. Durch die Dicke und Elastizität der Dichtungsbahnen bereitet eine harte, unelastische Anpressrolle beim Verschweißen keine Probleme. Die von den Folien bekannte Maßnahme, Folien auf hartem Untergrund mit weicher Rolle zu verschweißen wird hier umgekehrt: Weiche Bitumendichtungsbahn und harte Anpressrolle. Selbstverständlich können zur Erhöhung des Gewichts auch noch die anderen Rollen des Bitumen-Schweißgeräts aus einem harten Metall hergestellt sein. Als metallische Werkstoffe sind alle Werkstoffe geeignet, die eine harte Oberfläche aufweisen und bei den beim Schweißvorgang auftretenden hohen Temperaturen sich nicht verformen, beispielsweise Stahl mit seinen Legierungen, Nickel mit seinen Legierungen usw.

Vorteilhafterweise ist die Anpressrolle aus Stahl, vorzugsweise rostfreiem Stahl oder Edelstahl hergestellt. Auch andere geeignete harte Metalle oder Metalllegierungen sind grundsätzlich möglich. Wichtig für den Einsatz ist die Verfügbarkeit und der Kostenfaktor des Materials.

Gemäß einer weiteren vorteilhaften Ausbildung ist das Abstreifelement als stabiles metallisches Abstreifblech, das bezüglich seiner Stellung zu der Anpressrolle angepasst werden kann, ausgebildet.

Ein derart ausgebildetes Schweißgerät erlaubt somit einen kontinuierlichen Betrieb bei gleichzeitig erhöhter Anpresskraft und stabiler Lage. Abhängig vom Einsatzfall kann u.U. auf die Ersatz-Anpressrolle verzichtet werden, weil für die Reinigung der Anpressrolle direkt im eingebauten Zustand an dem Schweißgerät gesorgt ist.

Weitere Merkmale und Vorteile der Erfindung ergeben sich aus der folgenden Beschreibung eines Ausführungsbeispiels in Verbindung mit den Ansprüchen aus den Zeichnungen. Die einzelnen Merkmale können je für sich oder zu mehreren bei Ausführungsformen der Erfindung verwirklicht sein. Es stellen dar:
- Figur 1: die perspektivische Ansicht auf ein Bitumen-Schweißgerät;
- Figur 2: eine Seitenansicht;

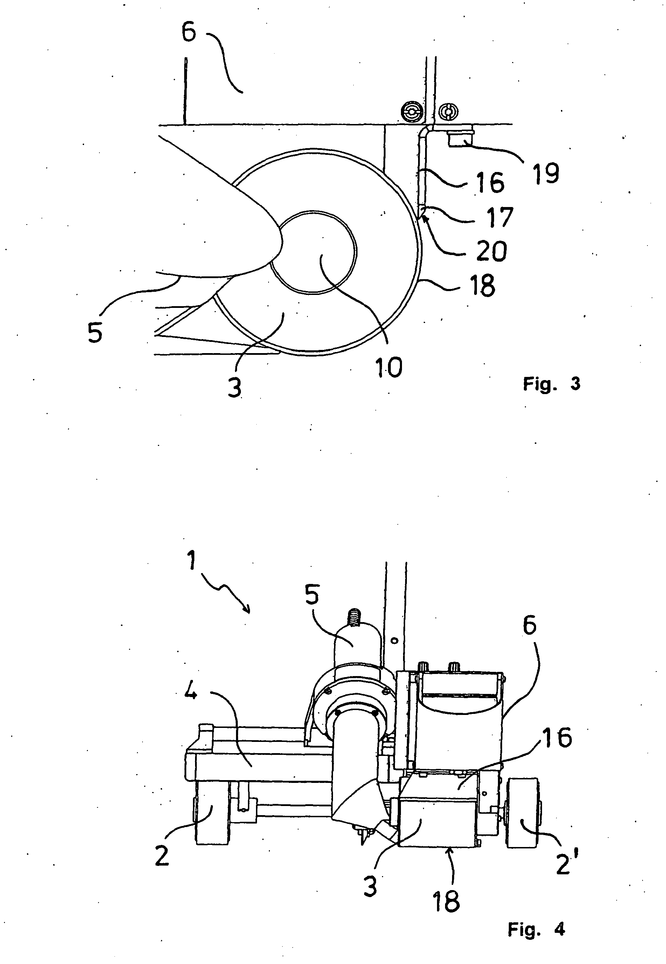

- Figur 3: eine Ausschnittsvergrößerung der Figur 2 mit der Anpressrolle und dem Abstreifelement;
- Figur 4: eine Stirnansicht des Bitumen-Schweißgeräts; und
- Figur 5: eine Detailansicht des in Schweißrichtung hinteren Endes des Schweißgerätes gemäß Figur 1 mit demontierter Anpressrolle.

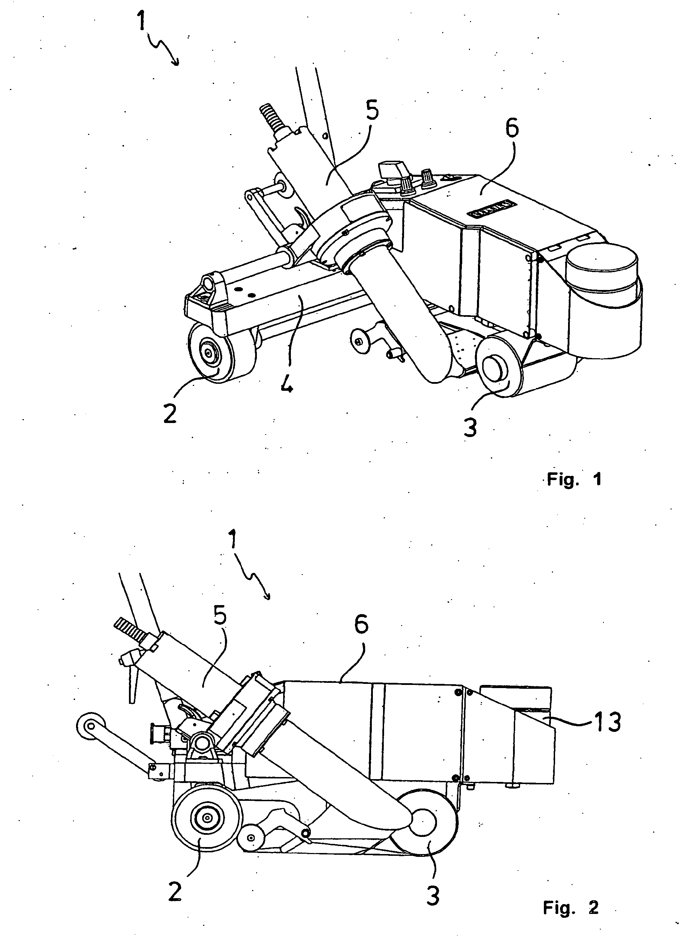

Figur 1 zeigt ein erfindungsgemäßes Bitumen-Schweißgerät 1 zum Verbinden von in der Zeichnung nicht dargestellten, überlappend verlegten Bitumen-Dichtungsbahnen, mit einem von Rollen 2, 2', 3 getragenen Fahrgestell 4 und mit einer Heizeinrichtung 5 zum lokalen Erhitzen der Dichtungsbahnen, die neben einem Gehäuse 6 des Schweißgeräts 1 angeordnet ist. In dem Gehäuse 6 sind in der Zeichnung nicht sichtbar ein Antrieb für die als Antriebs- und Anpressrolle wirkende Rolle 3 sowie Regel- und Steuerungseinrichtungen für den Antrieb und für die Heizeinrichtung 5 vorgesehen.

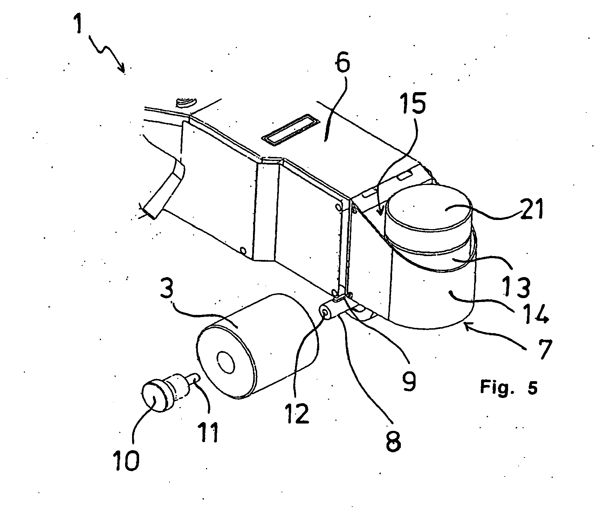

Die Rolle 3, die im weiteren als erste oder angetriebene Anpressrolle bezeichnet wird, ist an einem in Schweißrichtung hinteren Ende 7 des Fahrgestells 4 angeordnet. Sie ist mit einer Antriebsachse 8, wie aus Figur 5 ersichtlich, in axialer und in Umfangsrichtung starr gekoppelt. Die Fixierung in Umfangsrichtung erfolgt mittels einem sich entlang der Antriebsachse 8 erstreckenden, erhabenen Steg 9, der in eine korrespondierende, in der Zeichnung nicht sichtbare Nut der ersten Anpressrolle 3 formschlüssig eingreift. Die Arretierung in axialer Richtung wird mit einer Rändelschraube 10 mit Bund durchgeführt, die auf der der Antriebsachse 8 zugeordneten Seite ein Außengewinde 11 aufweist, das in ein stirnseitiges Innengewinde 12 der Antriebsachse 8 eingeschraubt ist.

In dem Ausführungsbeispiel ist die Anpressrolle 3 aus Edelstahl hergestellt und hat dadurch auch ein entsprechendes Gewicht. An dem Gehäuse ist bei diesem Ausführungsbeispiel zusätzlich ein Winkelblech 16 lösbar und in Längsrichtung variabel befestigt, das mit seinem freien Ende 17 an der Lauffläche 18 anliegt und an der Lauffläche 18 anhaftendes Bitumen bei der Vorwärtsdrehung der Anpressrolle 3 abstreift. Das Winkelblech 16 weist an seinem freien Ende 17 eine Fase 20 und, nicht sichtbar, zur Befestigung mittels der Schrauben 19, Langlöcher auf, die eine Anpassung des Winkelblechs 16 an die Lauffläche 18 ermöglichen.

In dem Ausführungsbeispiel ist das Winkelblech 16 mit unterschiedlicher Breite ausgeführt, wobei das an der Lauffläche 18 anliegende freie Ende 17 eine Breite aufweist, die der Breite der Lauffläche 18, an der sich Bitumen absetzen kann, entspricht.

An dem Gehäuse 6 ist in Schweißrichtung hinter der Antriebsachse 8 mit der ersten Anpressrolle 3 eine zweite Anpressrolle 13 oberhalb der Anpressrolle 3 angeordnet, die als Ersatz-Anpressrolle vorgesehen ist. Die Anpressrolle 13 weist einen Abstand zu den Bitumen-Dichtungsbahnen auf und wird beim Schweißen der Bitumen-Dichtungsbahnen durch das flüssige Bitumen nicht verschmutzt. Die zweite Anpressrolle 13 ist gegen die erste Anpressrolle 3 ohne Werkzeug austauschbar. Sie wirkt außerdem als Zusatzgewicht und belastet die Antriebsachse 8 und die Anpressrolle 3 zusätzlich mit ihrem Gewicht. Die Ersatz-Anpressrolle 13 und die Anpressrolle 3 können bei Verschmutzung der ersten Anpressrolle 3 mit in der Zeichnung nicht dargestelltem Bitumen einfach und schnell gegeneinander ausgetauscht werden, was einen quasi unterbrechungsfreien Betrieb des Schweißgerätes 1 ermöglicht.

Zum Aufbewahren der Anpressrolle 13 ist an dem Gehäuse 6 eine Halterung 14 vorgesehen, die einen der Form der Anpressrollen 3, 13 im Wesentlichen entsprechenden topfförmigen Aufnahmeraum 15 für die Rolle 13 aufweist. Der Aufnahmeraum 15 ist nach oben hin offen, so dass die Ersatz-Anpressrolle 13 ohne zusätzliche Fixierung in dem Aufnahmeraum 15 abgelegt werden kann. Somit ist das Entnehmen sowie das Einlegen der Rolle 13 in die Halterung 14 gegenüber einer Halterung mit separater Fixierung erleichtert. Die Fixierplatte 21 hält die Ersatz-Anpressrolle 13 über eine nicht sichtbare Gewindestange in Position.

## Patentansprüche

1. Schweißgerät (1) zur Verbindung von überlappend verlegten, flächigen Dichtungsbahnen, mit einem von Rollen (2, 2', 3) getragenen, angetriebenen Fahrgestell (4), mit einer Heizeinrichtung (5) zum lokalen Erhitzen der Dichtungsbahnen, die seitlich des Fahrgestells (4) angeordnet und an Randbereichen zwischen die Dichtungsbahnen einbringbar ist, und mit mindestens einer am Fahrgestell (4) angeordneten Anpressrolle (3) zum Zusammenpressen der heiß miteinander zu verbindenden Dichtungsbahnen, **dadurch gekennzeichnet, dass** an dem Fahrgestell (4) eine zweite, die Antriebsachse (8) belastende Anpressrolle (13) als Ersatz-Anpressrolle angeordnet ist, die ohne Werkzeug gegen die mit der angetriebenen Achse (8) des Schweißgerätes (1) gekoppelten, die zu verbindenden Bitumen-Dichtungsbahnen zusammenpressende erste Anpressrolle (3) austauschbar ist.

2. Schweißgerät nach Anspruch 1, **dadurch gekennzeichnet, dass** das Fahrgestell (4) eine Halterung (14) für die zweite Anpressrolle (13) aufweist, die vorzugsweise in Schweißrichtung hinter der ersten Antriebsrolle (3) angeordnet ist.

3. Schweißgerät nach Anspruch 1 oder 2, **dadurch gekennzeichnet, dass** die erste Anpressrolle (3) an der Antriebsachse (8) durch eine Rändelschraube (10), vorzugsweise mit Bund, fixiert ist.

4. Schweißgerät nach einem der vorangegangenen Ansprüche, **dadurch gekennzeichnet; dass** die Anpressrolle (3) zumindest eine Lauffläche (9) aus hartem metallischem Werkstoff aufweist.

5. Schweißgerät nach Anspruch 4, **dadurch gekennzeichnet, dass** ein Abstreifelement, (16) vorgesehen ist, das mit seinem freien Ende (17) an der Lauffläche (18) anliegt oder dieser angenähert ist.

6. Schweißgerät nach Anspruch 4 oder 5, **dadurch gekennzeichnet, dass** die Anpressrolle (3) vollständig aus einem harten metallischen Werkstoff hergestellt ist.

7. Schweißgerät nach einem der vorangegangenen Ansprüche 4 bis 6, **dadurch gekennzeichnet, dass** der harte metallische Werkstoff Stahl, vorzugsweise rostfreier Stahl, oder Edelstahl ist.

8. Schweißgerät nach einem der vorangegangenen Ansprüche, **dadurch gekennzeichnet, dass** das Abstreifelement (16) als metallisches Abstreifblech, vorzugsweise Winkelblech, ausgebildet ist.

## Claims

1. Welding machine (1) for joining overlapping webs of sealing material, with a powered chassis (4) supported by rolls (2, 2', 3), with a heating system (5) for local heating of the webs of sealing material that is mounted laterally on the chassis (4) and can be placed between the webs of sealing material in edge regions, with at least one pressure roll (3) installed on the chassis (4) for pressing together the webs of sealing material to be joined by means of heat, **characterized by** the feature(s) that a second pressure roll (13) serving as a replacement pressure roll is placed in the chassis (4), whose weight rests on the drive shaft (8) and which can be exchanged without tools for the first drive roll (3) that is connected to the drive shaft (8) of the welding machine (1) and presses together the bitumen webs to be joined.

2. Welding machine according to Claim 1, **characterized by** the feature(s) that the chassis (4) has a mount (14) for the second pressure roll (13) that is preferably located behind the first drive roll (3), relative to the welding direction.

3. Welding machine according to Claim 1 or 2, **characterized by** the feature(s) that the first pressure roll (3) is held in position on the drive shaft (8) by a - preferably flanged - knurled-head screw (10).

4. Welding machine according to one of the preceding Claims, **characterized by** the feature(s) that the pressure roll (3) has at least one contact surface (9) consisting of a hard metallic material.

5. Welding machine according to Claim 4, **characterized by** the feature(s) that a stripper element (16) is provided whose free end (17) contacts the contact surface (18) or is in close proximity to the same.

6. Welding machine according to Claim 4 or 5, **characterized by** the feature(s) that the pressure roll (3) is made entirely of a hard metallic material.

7. Welding machine according to one of the preceding Claims 4 to 6, **characterized by** the feature(s) that the hard metallic material is steel, preferably rust-proof or stainless steel.

8. Welding machine according to one of the preceding Claims, **characterized by** the feature(s) that the stripper element (16) is designed as a metallic stripper blade, preferably a metal angle piece.

## Revendications

1. Appareil de soudure (1) pour relier des bandes d'étanchéité surfaciques posées en chevauchement, avec un châssis (4) porté et entraîné par des rouleaux (2, 2', 3), avec un dispositif de chauffage (5) pour chauffer localement les bandes d'étanchéité, dispositif qui est disposé sur le côté du châssis (4) et qui peut être introduit dans des régions de bords entre les bandes d'étanchéité, et avec au moins un rouleau presseur (3) disposé sur le châssis (4) pour presser ensemble les bandes d'étanchéité à relier entre elles à chaud, **caractérisé en ce qu'**un deuxième rouleau presseur (13) dont le poids repose sur l'axe d'entraînement (8) est disposé sur le châssis (4) comme rouleau presseur de rechange, qui peut être échangé sans outil avec le premier rouleau presseur (3) pressant ensemble les bandes d'étanchéité bitumineuses à relier, couplé à l'axe mené (8) de l'appareil de soudure (1).

2. Appareil de soudure selon la revendication 1, **caractérisé en ce que** le châssis (4) présente un support (14) pour le deuxième rouleau presseur (13), qui est de préférence disposé après le premier rouleau presseur (3) dans la direction de soudage.

3. Appareil de soudure selon la revendication 1 ou 2, **caractérisé en ce que** le premier rouleau presseur (3) est immobilisé sur l'axe d'entraînement (8) par une vis moletée (10), de préférence pourvue d'un collet.

4. Appareil de soudure selon l'une des revendications précédentes, **caractérisé en ce que** le rouleau presseur (3) présente au moins une surface de contact (18) en matériau métallique dur.

5. Appareil de soudure selon la revendication 4, **caractérisé en ce qu'**il est prévu un élément racleur (16) qui, par son extrémité libre (17), s'applique contre la surface de contact (18) ou s'en approche.

6. Appareil de soudure selon la revendication 4 ou 5, **caractérisé en ce que** le rouleau presseur (3) est réalisé en totalité en matériau métallique dur.

7. Appareil de soudure selon l'une des revendications précédentes 4 à 6, **caractérisé en ce que** le matériau métallique dur est de l'acier, de préférence de l'acier inoxydable ou de l'acier spécial.

8. Appareil de soudure selon l'une des revendications précédentes, **caractérisé en ce que** l'élément racleur (16) est réalisé sous la forme d'une tôle métallique racleuse, de préférence une tôle angulaire.
